# EUROPÄISCHE PATENTSCHRIFT

(11) **EP 2 221 475 B1**
(45) Veröffentlichungstag und Bekanntmachung des Hinweises auf die Patenterteilung: **29.07.2015**
(21) Anmeldenummer: 10001379.6
(22) Anmeldetag: 11.02.2010
(51) Int. Cl.: F03D 1/00

(54) **Vorrichtung zur Positionierung eines Getriebes in einer Windenenergieanlage**
Device for positioning of a transmission in a wind turbine
Dispositif de positionnement d'une transmission dans une éolienne

(30) Priorität: 20.02.2009 DE 102009010584
(43) Veröffentlichungstag der Anmeldung: 25.08.2010
(73) Patentinhaber: Nordex Energy GmbH, 22848 Norderstedt (DE)
(72) Erfinder: Nitzpon, Joachim, 18209 Steffenshagen (DE)
(74) Vertreter: Hauck Patentanwaltspartnerschaft mbB

(56) Entgegenhaltungen:
- EP-A1- 0 003 108
- EP-A1- 1 566 543
- EP-A2- 2 003 362
- CN-A- 101 363 419
- US-A- 5 360 195
- US-A- 5 690 304

## Beschreibung

Die vorliegende Erfmdung betrifft eine Vorrichtung zur Positionierung eines Getriebes in einer Windenergieanlage, das in Verlängerung der Rotorwelle über eine Stegwelle gelagert wird und sich über eine Drehmomentstütze an einer Tragstruktur der Windenergieanlage abstützt.

Bei Windenergieanlagen wird zur Lagerung des Rotors häufig auf eine ZweiPunkt-Lagerung oder eine Momentenlagerung zurückgegriffen. Bei dieser Lagerung ist das Getriebe generatorseitig an einer Rotorwelle oder einer der Rotorwelle ähnlichen Konstruktion direkt oder über einen Flansch angebunden, um die Drehmomente aus dem Rotor in das Getriebe zur Drehmomentwandlung zu übertragen. Das Getriebe wird wie der Rotor jedoch generatorseitig von der Rotorlagerung über die mit der Rotorwelle verbundene Getriebeeingangswelle (Stegwelle) in Verbindung mit einem Steg der ersten Planetenstufe des Getriebes gelagert. Die im Drehmoment der Windenergieanlage auftretenden Reaktionsmomente an dem Getriebe müssen über eine Drehmomentstütze in eine Tragstruktur geleitet werden. Um eine statisch überbestimmte Lagerung durch die Kombination aus Rotorlagerung und Steglagerung des Getriebes zu vermeiden, ist es bekannt, Entkopplungselemente an der Drehmomentstütze einzusetzen. Solche Entkopplungselemente sind beispielsweise aus EP 1 566 543 A1 und aus DE 20 2005 001 519 U1 bekannt. Die Entkopplungselemente haben die Aufgabe, die zusätzlichen Lagerkräfte, die in Rotorlagern und in den Steglagern aufgrund von Fertigungstoleranzen, Montageabweichungen und Verformungen im Betrieb auftreten, zu reduzieren. Die Entkopplungselemente sind aus Elastomeren aufgebaut, die eine vorbestimmte Steifigkeit oder eine abgestimmte Steifigkeitskennlinie besitzen.

Aus der EP 2 003 362 A2 ist bekannt, das derartige Entkopplungselemente aus Elastomeren mit einer hydraulischen Vorrichtung zu versehen, die Steifigkeit der als Federelemente wirkenden Elastomerelemente einstellen kann. Diese Federelemente dienen lediglich zur Abfederung von Verbiegungs-, Verformungs- und Verschiebungskräften, die im Betrieb der Anlage, vor allem im Extremlästfall, zu Schwingungen und Bewegungen führen.

Bei der Verwendung von Entkopplungselementen ist es notwendig, die Position des Getriebes relativ zur Rotorlagerung sehr genau vor Ort einzustellen, um den Einfluss von Fertigungsabweichungen und Montageabweichungen möglichst gering zu halten. Bisher erfolgt die Positionierung des Getriebes zum Beispiel durch zwei Keile, die gegeneinander verschoben werden, um so die Höhe der Drehmomentstütze relativ zu der Tragstruktur präzise einzustellen.

Bei der EP 0 003 108 A1 wird ein Getriebe mittels Hydraulikzylindern gegenüber einem Fundament positioniert, wobei die Hydraulikzylinder einen Kolben und einen Teller aufweisen. Problematisch an der Art der Positionierung ist, dass bei ihr die Hydraulikzylinder dauerhaft mit Druck zu beaufschlagen sind. Ein Ausfall dieser Druckbeaufschlagung muß ausgeschlossen sein.

Der Erfindung liegt die Aufgabe zugrunde, eine Vorrichtung zur Positionierung eines Getriebes in einer Windenergieanlage mit Hilfe von Hydraulikzylindern zu schaffen, die die bisher bekannten Nachteile vermeidet.

Erfindungsgemäß wird die Aufgabe durch eine Vorrichtung mit den Merkmalen aus Anspruch 1 gelöst. Vorteilhafte Ausgestaltungen bilden den Gegenstand der Unteransprüche.

Die erfindungsgemäße Vorrichtung dient zur Positionierung eines Getriebes in einer

Windenergieanlage. Das Getriebe ist über eine Drehmomentstütze an einer Tragstruktur der Windenergieanlage abgestützt, wobei die Drehmomentstütze über mindestens ein Entkopplungselement gelagert ist, das zwischen Drehmomentstütze und Tragstruktur angeordnet ist. Erfindungsgemäß weist die Drehmomentstütze mindestens einen Stützkörper und eine hydraulische Vorrichtung mit mindestens einem Hydraulikzylinder auf. Über den Hydraulikzylinder der hydraulischen Vorrichtung ist die Position des Entkopplungselements relativ zu dem Stützkörper einstellbar, womit auch die Position des Stützkörpers relativ zu der Tragstruktur einstellbar ist. Die Verwendung einer hydraulischen Vorrichtung erlaubt es, die Position des Entkopplungselements relativ zu dem Stützkörper einzustellen, sodass Fertigungs- und Montagetoleranzen auf einfache Weise ausgeglichen werden können und die Drehmomentstütze das Getriebe in die gewünschte Position relativ zu der Tragstruktur einstellt. Der Hydraulikzylinder weist einen Kolben und einen Teller auf. Weiter ist eine Feststelleinrichtung für den Teller vorgesehen, die den Teller in seiner Position abstützt und/oder feststellt.

In einer bevorzugten Ausgestaltung ist der Hydraulikzylinder in den Stützkörper der Drehmomentstütze integriert. Bevorzugt ist die Drehmomentstütze in Form eines ringförmigen Gehäuseteils des Getriebes aufgebaut, das seitlich zwei abstehende Stützkörper besitzt, die über Entkopplungselemente an einer Tragstruktur der Windenergieanlage angebunden sind.

In einer weiteren vorteilhaften Ausbildung besitzt der Stützkörper zwei in entgegengesetzter Richtung orientierte Hydraulikzylinder. Durch die Betätigung der Hydraulikzylinder kann bei der Positionierung auf den Stützkörper jeweils eine Kraft in entgegengesetzter Richtung ausgeübt werden, sodass der Stützkörper sich positionieren lässt und - falls erforderlich - Vorspannkräfte auf die Entkopplungselemente aufgebracht werden können.

Zweckmäßigerweise kann der Kolben des Hydraulikzylinders in dem Stützkörper geführt und der Teller des Hydraulikzylinders außerhalb des Stützkörpers angeordnet sein. Die aus dem Stützkörper vorstehende

Einheit aus Kolben und Teller dient als Auflage für das Entkopplungselement, das auf einer Stirnseite des Tellers angeordnet ist.

In einer bevorzugten Ausgestaltung der Erfindung stellt die Feststelleinrichtung den Teller relativ zu dem Stützkörper in seiner Position fest. Die Feststelleinrichtung wird eingesetzt, wenn durch die Verwendung des Hydraulikzylinders der Stützkörper positioniert ist, seine endgültige Position eingenommen hat und bei Bedarf das Entkopplungselement vorgespannt ist. Um den Hydraulikzylinder nicht dauerhaft mit einem Druck zu beaufschlagen, wird die Feststelleinrichtung eingesetzt, die den kopfseitigen Teller an dem Kolben in der definierten Position hält oder in einem definierten Abstand gegen den Stützkörper abstützt. In Verbindung mit einem Entkopplungselement, dessen Steifigkeit einstellbar ist, ist die erfindüngsgemäße Vorrichtung besonders vorteilhaft, da der Hydraulikzylinder nicht die hohen Vorspannkräfte, die bei der Einstellung des Entkopplungselements auftreten, aufbringen muss. Die Einstellung der Steifigkeit des Entkopplungselements erfolgt erst nach der Feststellung der Einheit aus Kolben und Teller des Hydraulikzylinders durch die Feststelleinrichtung.

Die Feststelleinrichtung weist bevorzugt eine Stellmutter auf, deren Innengewinde' mit einem Außengewinde des Tellers zusammenwirkt. Die Stellmutter kann über den Teller geschraubt werden, bis sie auf dem Stützkörper aufliegt und den Teller gegenüber diesem abstützt. Hierdurch wird ein Drücken des Tellers und des Kolbens in den Hydraulikzylinder zurück vermieden. Alternativ kann die Stellmutter auch zwischen Stützkörper und Teller angeordnet sein und mit einem Gewindeabschnitt an dem zum Stützkörper weisenden Ende des Tellers zusammenwirken. Ebenso kann die Feststelleinrichtung auch zweiteilig ausgebildet sein, mit einem Innenring und einem Außenring, die miteinander verschraubt in ihrer Höhe einstellbar sind.

In einer bevorzugten Ausgestaltung besitzt der Stützkörper für jeden Hydraulikzylinder einen Hydraulikanschluss, um den Hydraulikzylinder zu betätigen. Auf diese Weise wird sichergestellt, dass die Hydraulikzylinder unabhängig voneinander eingestellt und auch mit einem unterschiedlichen Druck beaufschlagt werden können. Hierdurch ist es möglich, eine Vorspannung zu wählen und im Zusammenspiel mit der Rotorlagerung ein vorbestimmtes Moment auf die Rotorwelle auszuüben. Die Lagerkräfte der Rotorlagerung und Steglagerung können durch einen unterschiedlichen Druck in den Hydraulikzylindern verändert werden.

In einer bevorzugten Ausgestaltung besitzt die Drehmomentstütze zwei einander gegenüberliegende Stützkörper, wobei bevorzugt jeder Stützkörper über zwei Entkopplungselemente an die Tragstruktur angebunden ist.

Ein bevorzugtes Ausführungsbeispiel wird nachfolgend anhand der Figuren näher erläutert. Es zeigt:
- Fig. 1: eine teilweise geschnittene Ansicht auf die Getriebelagerung von der Seite,
- Fig. 2: eine Seitenansicht aus Richtung des Rotors auf den Schnitt entlang der Linie A-A aus Fig. 1,
- Fig. 3: einen Schnitt durch den Stützkörper und
- Fig. 4: eine Detailansicht einer zweiteilig ausgebildeten Feststelleinrichtung.

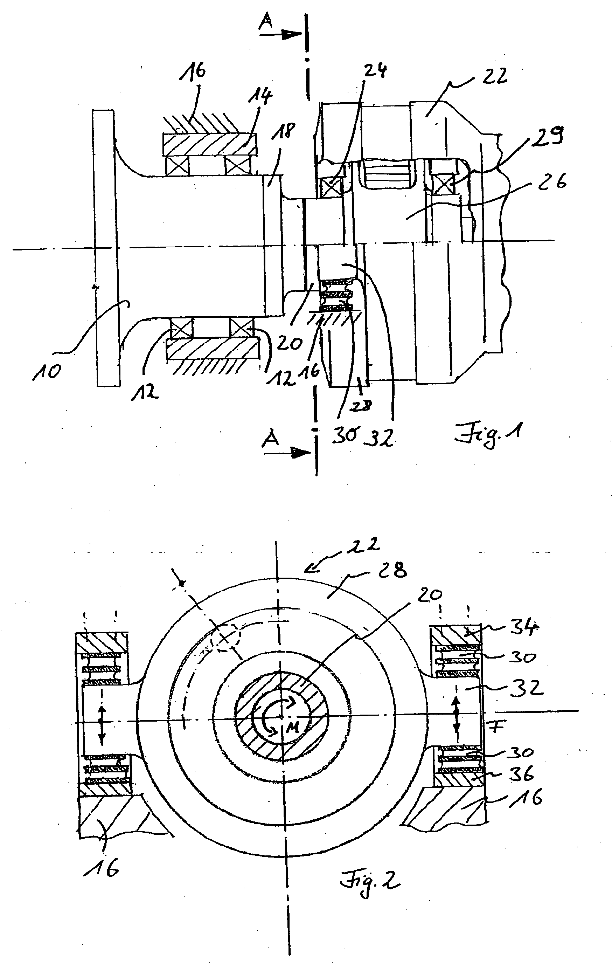

Fig. 1 zeigt in einer Prinzipskizze eine Rotorwelle 10, die über ein schematisch dargestelltes Rotorlager 12 innerhalb eines Rotorlagergehäuses 14 an einer Tragstruktur 16 gelagert ist. Die Rotorwelle 10 besitzt getriebeseitig einen Flansch 18, der mit einer Stegwelle 20 des Getriebes 22 verbunden ist. Das Getriebe ist über ebenfalls schematisch dargestellten Steglager 24 und 29 auf der Stegwelle 20 gelagert. Stegwelle 20 und Steg 26 bilden hier eine Einheit. Die Stegwelle 20 überträgt ein Drehmoment der Rotorwelle 10 auf den Steg 26 des Getriebes.

Um die an dem Getriebe 22 auftretenden Reaktionsmomente abzuleiten, ist eine Drehmomentstütze 28 vorgesehen. Wie in Fig. 2 dargestellt, weist die Drehmomentstütze 28 zwei Stützkörper 32 auf. In Fig. 1 ist die Drehmomentstütze 28 geschnitten dargestellt, wobei nur die untere Hälfte sichtbar ist. Die Drehmomentstütze 28 mit ihrem Stützkörper 32 ist über ein Entkopplungselement 30 auf der Tragstruktur 16 abgestützt, wobei Unter- und Oberjoch sowie Ständer (vgl. Fig. 2 und Fig. 5) zur besseren Übersicht nicht dargestellt sind.

Aus der Darstellung in Fig. 1 wird direkt deutlich, dass durch die Rotorlager 12 die Position der Rotorwelle und damit auch der Stegwelle festgelegt ist. Um die Drehmomentstütze anzubinden, ist es daher notwendig, Entkopplungselemente vorzusehen, anderenfalls könnte eine überbestimmte Lagerung auftreten.

Fig. 2 zeigt eine Seitenansicht aus Sicht des Rotors auf den Schnitt entlang der Linie A-A aus Fig. 1. Fig. 2 zeigt die Tragstruktur 16 in dem Bereich, in dem die Tragstruktur 16 die Drehmomentstütze 28 lagert. Von der Drehmomentstütze 28 ist der Stützkörper 32 in Fig. 2 zu erkennen, der jeweils zwischen zwei Entkopplungselementen 30 gelagert ist. Je nach Ausgestaltung der Drehmomentstütze kann der Stützkörper einstückig mit dem Getriebegehäuse ausgebildet sein. In diesem Fall bildet der Stützkörper 32 bereits die Drehmomentstütze. In einer anderen Ausgestaltung kann die Drehmomentstütze als ringförmiges Gehäuseteil des Getriebes ausgebildet sein, wobei die Stützkörper seitlich abstehen. In Fig. 2 ist ebenfalls zu erkennen, dass die Entkopplungselemente nicht unmittelbar auf der Tragstruktur 16 gelagert sind, sondern über ein Oberjoch 34 bzw. ein Unterjoch 36. Ober- und Unterjoch sind durch Ständer 56 (hier nur ein generatorseitiger Ständer dargestellt) miteinander verbunden. Bei der hydraulischen Positionierung des Stützkörpers muss die Einheit aus Unterjoch, Stütze und Oberjoch nicht getrennt werden.

In Fig. 2 ist ebenfalls die Stegwelle 20 dargestellt und eine Seitenansicht im Schnitt A-A aus Richtung Rotor auf das Getriebe 22 zu erkennen. Durch die Stützkörper 32 wird das auftretende Reaktionsmoment aus den Antriebsmomenten M, die durch Doppelpfeile dargestellt sind, in eine ebenfalls durch Doppelpfeile dargestellte Reaktionskraft umgesetzt. Die Reaktionskraft F wird über die Entkopplungselemente 30 sowie Ober- und Unterjoch an die Tragstruktur 16 abgeleitet. Bei mehreren Stützkörpern teilt sich die aus dem Reaktionsmoment resultierende Reaktionskraft entsprechend der Anzahl der Stützkörper auf die Entkopplungselemente auf.

Fig. 2 verdeutlicht, welche Problematik bei der Positionierung des Getriebes auftreten kann. Die Position des Getriebes ist über die Lagerung der Rotorwelle festgelegt. Andererseits ist aber auch die Position der Tragstruktur fest vorgegeben, sodass beispielsweise über die Verwendung von geeigneten Jochen eine Anbindung der Drehmomentstütze an die Tragstruktur erfolgen muss. Eine solche Positionierung ist sehr aufwendig.

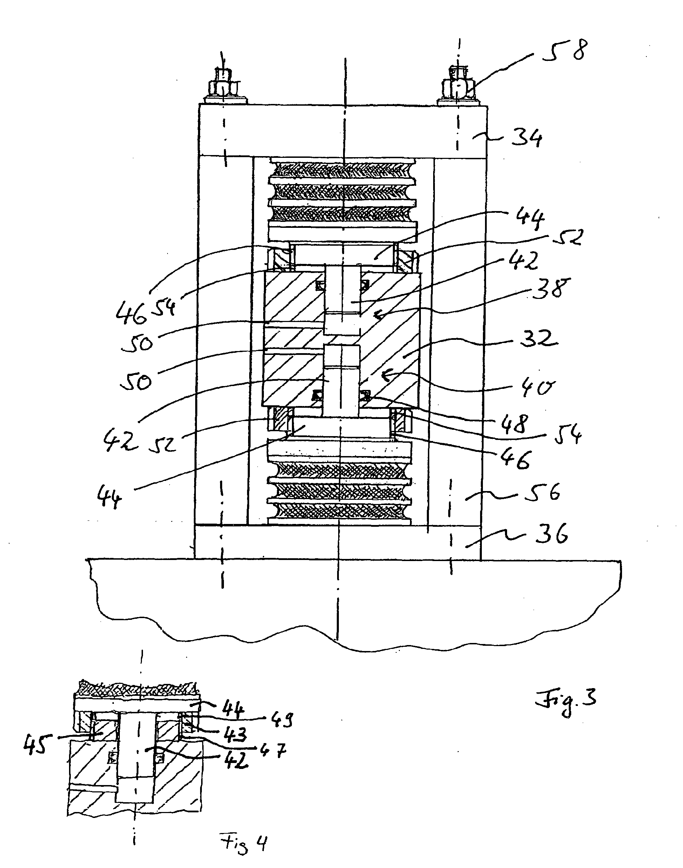

Fig. 3 zeigt einen Schnitt durch einen Stützkörper 32, in dem die Hydraulikzylinder 38 und 40 zu erkennen sind. Die Hydraulikzylinder weisen jeweils eine zylindrische Sacklochbohrung in dem Stützkörper 32 auf. In der Sacklochbohrung ist ein Kolben 42 angeordnet, der einen Teller 44 besitzt. Der Teller 44 ist scheibenförmig ausgebildet und besitzt an seiner Außenseite ein Außengewinde 46. Der Kolben 42 ist über ein Dichtsystem 48 in der Sacklochbohrung abgedichtet. Die Sacklochbohrung, in der der Kolben 42 geführt ist, besitzt einen Hydraulikanschluss 50. Der Hydraulikanschluss 50 besitzt einen Kanal, der nahe dem Grund der Sacklochbohrung in diese mündet. Über den Hydraulikanschluss 50 kann das Hydraulikmedium der Sacklochbohrung zugeführt und so die Position des Kolbens 42 und des Tellers 44 gegenüber dem Stützkörper 32 eingestellt werden.

Zusätzlich ist in Fig. 3 eine Feststelleinrichtung mit einer Stellmutter (52) vorgesehen, die ein Innengewinde 54 besitzt. Die Stellmutter 52 ist mit dem Teller 44 bzw. einem unteren Tellerabschnitt verschraubt.

Alternativ zu der Feststelleinrichtung mit einer Stellmutter 52 aus Fig. 3 zeigt Fig. 4 eine zweiteilig ausgebildete Feststelleinrichtung. Die Feststelleinrichtung besteht aus einem Innenring 45, der durch den Kolben 42 geführt wird. Der Innenring 45 besitzt ein Außengewinde 47, das in ein Innengewinde 49 eines Außenrings 43 eingeschraubt ist. Durch Verdrehen von Innenring 45 gegenüber dem Außenring 43 kann die Feststelleinrichtung an die Position des Tellers 44 angepasst werden.

Fig. 3 zeigt ferner ein Oberjoch 34 und ein Unterjoch 36, die über einen Ständer 56 gegeneinander abgestützt sind, wobei der Ständer 56 und Ober/Unterjoch über eine Schraubverbindung 58 gesichert sind.

Mit dem in Fig. 3 dargestellten Hydraulikzylinder kann die aufwendige mechanische Positionierung des Getriebes beispielsweise über Keile entfallen. Die Genauigkeit der Positionierung mit Keilen ist begrenzt, außerdem müssen dabei die Entkopplungselemente 30 erst nach der Positionierung der Drehmomentstütze verspannt werden. Toleranzen in der Steifigkeit der Entkopplungselemente können dabei in Verbindung mit der groben Positionierung über Keile zu zusätzlichen Kräften (Momenten) in der Steg- und in der Rotorlagerung sowie in der Rotorwelle, dem Getriebesteg und der Wellen-Naben-Verbindung zwischen Rotorwelle und Steg führen. Diese müssen bei der Auslegung des Triebstrangs mit berücksichtigt werden. Durch die Verwendung der Hydraulikzylinder ist es möglich, die Stützkörper und damit das Getriebe deutlich einfacher zu positionieren. Hinzu kommt, dass bei Wartungsarbeiten die Positionierung überprüft werden kann, auch ohne sicherheitsrelevante Schraubverbindungen zu lösen.

Die Positionierung des Getriebes und die erforderliche Vorspannung der Entkopplungselemente erfolgt über die hydraulische Vorrichtung, die in die Drehmomentstütze bzw. den Stützkörper 32 integriert ist. Werden alle vier Hydraulikzylinder mit dem gleichen Druck beaufschlagt, erfolgt eine gleiche Vorspannung aller vier Entkopplungselemente. Die definierten Gewichtskräfte des Getriebes wirken auf die Steg- und die Rotorlagerung und können in dieser definierten Form auch bei der Auslegung genau berücksichtigt werden. Die Reaktionskräfte aus Verformungen im Betrieb sind damit über die Steifigkeit der Entkopplungselemente in Verbindung mit der aufgebrachten Vorspannung definiert.

Durch eine höhere Druckbeaufschlagung der unteren Hydraulikzylinder kann die Wirkung der Gewichtskraft des Getriebes auf die Lagerung teilweise oder vollständig kompensiert werden. Es ist auch vorstellbar, dass eine höhere Kraft aufgebracht werden kann, die entgegen der Gewichtskraft des Getriebes wirkt. Durch eine höhere Druckbeaufschlagung der oberen Hydraulikzylinder kann die Wirkung der Gewichtskraft auf die Lagerung auch erhöht werden.

Die Verwendung von Hydraulikzylindern erlaubt es, auch eine reproduzierbare Positionierung des Getriebes vorzunehmen. Mit der hydraulischen Vorrichtung erfolgt eine Positionierung des Getriebes bei gleichzeitiger Vorspannung der Entkopplungselemente. Die etwaig auftretenden Abweichungen in der Steifigkeit der Entkopplungselemente werden dabei untereinander ausgeglichen. Die Elemente mit unterschiedlicher Steifigkeit werden dabei unterschiedlich stark verformt.

Kommen Entkopplungselemente zum Einsatz, deren Steifigkeit hydraulisch regulierbar sind, erfolgt die Positionierung mit gleichzeitiger Vorspannung der Entkopplungselemente bevor die Entkopplungselemente für die hydraulische Regulierung mit Druck beaufschlagt werden. Die erforderlichen Kräfte zur Aufbringung der Vorspannung und Positionierung sind dadurch wesentlich geringer.

## Patentansprüche

1. Vorrichtung zur Positionierung eines Getriebes (22) in einer Windenergieanlage, das über eine Drehmomentstütze an einer Tragstruktur (16) der Windenergieanlage abgestützt ist, wobei die Drehmomentstütze (28) über mindestens ein Entkopplungselement (30) gelagert ist, das zwischen Drehmomentstütze (28) und Tragstruktur (16) angeordnet ist, und mindestens einen Stützkörper (32) und eine hydraulische Vorrichtung mit mindestens einem Hydraulikzylinder (38, 40) aufweist, über den die Position des Stützkörpers (32) relativ zu der Tragstruktur (16) einstellbar ist, wobei der Hydraulikzylinder (38, 40) einen Kolben (42) und einen Teller (44) aufweist, **dadurch gekennzeichnet, dass** eine Feststelleinrichtung für den Teller (44) vorgesehen ist, die den Teller (44) in seiner Position abstützt und/oder feststellt.

2. Vorrichtung nach Anspruch 1, **dadurch gekennzeichnet, dass** der Hydraulikzylinder in den Stützkörper (32) integriert ist.

3. Vorrichtung nach Anspruch 1 oder 2, **dadurch gekennzeichnet, dass** der Stützkörper (32) zwei in entgegengesetzter Richtung orientierte Hydraulikzylinder aufweist.

4. Vorrichtung nach einem der Ansprüche 2 oder 3, **dadurch gekennzeichnet, dass** der Kolben (42) des Hydraulikzylinders in dem Stützkörper (32) geführt ist und der Teller (44) des Hydraulikzylinders außerhalb des Stützkörpers (32) angeordnet ist.

5. Vorrichtung nach Anspruch 4, **dadurch gekennzeichnet, dass** die Feststelleinrichtung für den Teller (44) den Teller (44) relativ zu dem Stützkörper (32) in seiner Position abgestützt und/oder feststellt.

6. Vorrichtung nach einem der Ansprüche 1 bis 5, **dadurch gekennzeichnet, dass** die Feststelleinrichtung eine Stellmutter (52) aufweist und der Teller ein zur Stellmutter passendes Außengewinde aufweist.

7. Vorrichtung nach einem der Ansprüche 1 bis 5, **dadurch gekennzeichnet, dass** die Feststelleinrichtung einen Innenring (45) mit Außengewinde (47) und einen Außenring (43) mit einem passenden Innengewinde (49) aufweist.

8. Vorrichtung nach Anspruch 7, **dadurch gekennzeichnet, dass** der Innenring (45) und der Anßenring (43) der Feststelleinrichtungzwischen
Teller (44) und Stützkörper angeordnet sind.

9. Vorrichtung nach einem der Ansprüche 2 bis 8, **dadurch gekennzeichnet, dass** der Stützkörper (32) für jeden Hydraulikzylinder einen Hydraulikanschluss (50) aufweist, um den Hydraulikzylinder zu betätigen.

10. Vorrichtung nach einem der Ansprüche 1 bis 9, **dadurch gekennzeichnet, dass** die Drehmomentstütze zwei einander gegenüberliegende Stützkörper (32) besitzt.

11. Vorrichtung nach Anspruch 10, **dadurch gekennzeichnet, dass** jeder Stützkörper über zwei einander gegenüberliegende Entkopplungselemente (30) gelagert ist.

## Claims

1. An apparatus for positioning a gearbox (22) in a wind turbine, which gearbox is supported on a bearing structure (16) of the wind turbine by way of a torque support (28), wherein the torque support (28) is mounted via at least one uncoupling element (30), which is arranged between the torque support (28) and the bearing structure (16), and the torque support comprises at least one support body (32) and a hydraulic apparatus with at least one hydraulic cylinder (38, 40), by way of which the position of the support body (32) is adjustable with respect to the bearing structure (16), wherein the hydraulic cylinder (38, 40) comprises a ram (42) and a face plate (44), **characterized in that** a locking device is provided for the face plate (44) supporting and/or locking the face plate (44) in its position.

2. The apparatus according to claim 1, **characterised in that** the hydraulic cylinder is integrated into the support body (32).

3. The apparatus according to claim 1 or 2, **characterised in that** the support body (32) has two hydraulic cylinders, oriented in opposite directions.

4. The apparatus according to claim 2 or 3, **characterised in that** the ram (42) of the hydraulic cylinder is guided in the support body (32) and the face plate (44) of the hydraulic cylinder is provided outside the support body (32).

5. The apparatus according to claim 4, **characterised in that** the locking device for the face plate (44) supports and/or locks the face plate (44) in its position relative to the support body (32).

6. The apparatus according to one of the claims 1 to 5, **characterised in that** the locking device has an adjusting nut (52) and the face plate (44) has an external thread matching with the adjusting nut.

7. The apparatus according to one of the claims 1 to 5, **characterised in that** the locking device has an inner ring (45) with an external thread (47) and an outer ring (43) with a matching internal thread (49).

8. The apparatus according to claim 7, **characterised in that** the inner ring (45) and the outer ring (43) of the locking device are arranged between the face plate (44) and the support body (32).

9. The apparatus according to one of the claims 2 to 8, **characterised in that** the support body (32) has a hydraulic connection (50) for each hydraulic cylinder at a time, in order to actuate the hydraulic cylinder.

10. The apparatus according to one of the claims 1 to 9, **characterised in that** the torque support has two support bodies (32) located opposite to each other.

11. The apparatus according to claim 10, **characterised in that** each support body is mounted by way of two uncoupling elements (30) located opposite to each other.

## Revendications

1. Dispositif de positionnement d'un engrenage (22) dans une éolienne, qui est supporté dans une structure porteuse (16) de l'éolienne à travers un support de couple, dans lequel le support de couple (28) est monté à travers au moins un élément de découplage (30) qui est disposé entre le support de couple (28) et la structure porteuse (16) et comporte au moins un corps de soutien (32) et un dispositif hydraulique avec au moins un vérin hydraulique (38, 40) à l'aide duquel la position du corps de soutien (32) se laisse ajuster par rapport à la structure porteuse (16), le vérin hydraulique (38, 40) comportant un piston (42) et un plateau (44), **caractérisé en ce que** un dispositif d'immobilisation est pourvu pour le plateau (44), qui appuie et/ou fixe le plateau (44) dans sa position.

2. Dispositif selon la revendication 1, **caractérisé en ce que** le vérin hydraulique est intégré au corps de soutien (32).

3. Dispositif selon la revendication 1 ou 2, **caractérisé en ce que** le corps de soutien (32) comporte deux vérins hydrauliques orientés dans des sens opposés.

4. Dispositif selon une des revendications 2 ou 3, **caractérisé en ce que** le piston (42) du vérin hydraulique est guidé dans le corps de soutien (32), et le plateau (44) du vérin hydraulique est disposé au dehors du corps de soutien (32).

5. Dispositif selon la revendication 4, **caractérisé en ce que** le dispositif d'immobilisation pour le plateau (44) appuie et/ou fixe le plateau (44) dans sa position par rapport au corps de soutien (32).

6. Dispositif selon l'une quelconque des revendications 1 à 5, **caractérisé en ce que** le dispositif d'immobilisation comporte un écrou de réglage (52), et le plateau a un filet extérieur correspondant à l'écrou de réglage.

7. Dispositif selon l'une quelconque des revendications 1 à 5, **caractérisé en ce que** le dispositif d'immobilisation comporte une bague intérieure (45) avec filet extérieur (47), et une bague extérieure (43) avec un filet intérieur (49) correspondant.

8. Dispositif selon la revendication 7, **caractérisé en ce que** la bague intérieure (45) et la bague extérieure (43) du dispositif d'immobilisation sont disposées entre le plateau (44) et le corps de soutien.

9. Dispositif selon l'une quelconque des revendications 2 à 8, **caractérisé en ce que** le corps de soutien (32) comporte un raccord hydraulique (50) pour chaque vérin hydraulique afin d'actionner le vérin hydraulique.

10. Dispositif selon l'une quelconque des revendications 1 à 9, **caractérisé en ce que** le support de couple a deux corps de soutien (32), l'un vis-à-vis de l'autre.

11. Dispositif selon la revendication 10, **caractérisé en ce que** chaque corps de soutien est monté à travers deux éléments de découplage (30), dont l'un est vis-à-vis de l'autre.
